# EUROPEAN PATENT SPECIFICATION

(11) **EP 2 230 101 B1**
(45) Date of publication and mention of the grant of the patent: **04.01.2012**
(21) Application number: 10156654.5
(22) Date of filing: 16.03.2010
(51) Int. Cl.: B60C 11/03, B60C 11/12

(54) **Pneumatic tire**
Luftreifen
Pneu

(30) Priority: 16.03.2009 JP 2009063101
(43) Date of publication of application: 22.09.2010
(73) Proprietor: The Yokohama Rubber Co., Ltd., Minato-ku Tokyo 105-8685 (JP)
(72) Inventor: Endou, Kenichirou c/o The Yokohama Rubber Co., LTD., Tokyo 105-8685 (JP); Shimada, Jun c/o The Yokohama Rubber Co., LTD., Kanagawa 254-8601 (JP); Gokita, Ken c/o The Yokohama Rubber Co., LTD., Kanagawa 254-8601 (JP); Naito, Mitsuru c/o The Yokohama Rubber Co., LTD., Kanagawa 254-8601 (JP); Arakawa, Jun c/o The Yokohama Rubber Co., LTD., Kanagawa 254-8601 (JP)
(74) Representative: Dilg, Haeusler, Schindelmann Patentanwaltsgesellschaft mbH

(56) References cited:
- EP-A1- 0 172 974
- EP-A1- 0 609 195
- EP-A1- 0 625 435
- JP-A- 6 055 909
- JP-A- 8 164 715

## Description

The present invention relates to a pneumatic tire suitable as a racing tire, and in particular, the present invention relates to a pneumatic tire that can improve running performance on wet road surfaces when traveling straight and when cornering.

Tires provided with a plurality of main grooves extending in a tire circumferential direction in a tread portion are normally used as wet tires for racing. It is recognized that the superior running performance of such tires on wet road surfaces is exhibited based on a drainage capability of the main grooves. However, in high speed races, an amount of water pushed back forward increases since water cannot be drained by the main grooves in tires having a tread pattern with main grooves extending in the tire circumferential direction as a main constituent. This results in an occurrence of a hydroplaning phenomenon. Also, in races with GT touring cars having tire housings, there is an adverse effect whereby water remains in tire housings when tires having a tread pattern with main grooves extending in the tire circumferential direction as the main constituent are used. Thus, a groove arrangement that can drain water on road surfaces in the tire lateral direction is required.

As a wet tire for racing meeting such a demand, a tire is provided including, in the tread portion, a main groove that is in a tread center position and that extends in the tire circumferential direction, a plurality of first angled grooves that is in communication with the main groove and that extends at an angle, in a direction opposite a rotational direction, from the tread center position towards both shoulder sides, and a plurality of second angled grooves that is not in communication with the main groove and that extends at an angle, in the same direction as the respective first angled grooves, while intersecting at least three of the first angled grooves, wherein a plurality of blocks is partitioned by the main groove and the angled grooves (for example, see Japanese Patent Publication (A) No. 2007-238060).

However, when the tread portion is partitioned into a plurality of blocks by the main groove and the angled grooves as disclosed above, a rigidity of the tread portion deteriorates. Since a large load is applied to tires when braking and when cornering in racing, there is a problem that a necessary braking performance and cornering performance on wet road surfaces cannot be exhibited when the rigidity of the tread portion is insufficient.

The Japanese Patent Publication 2007-238060 (A) discloses a pneumatic tire capable of achieving both draining and steering stability in wet conditions even in case of a large grounding width.

EP 0 172 974 A1 discloses a directional tire having lateral grooves arranged in substantially 'V' shaped configurations around the tire. The lateral grooves on each side of the mid-circumferential plane form a series of circumferentially spaced lands there between. Each of the lands extends from a mid-circumferential portion of the tire to the edge of a respective tread. Each land has a first face directed in one rotational direction and a second face directed in the other rotational direction. In order to modify the directional properties of the tire one of said faces, preferably the trailing face in normal use, is broken by axially extending grooves.

An object of the present invention is to provide a pneumatic tire that can improve running performance on wet road surfaces when traveling straight and when cornering.

The pneumatic tire of the present invention achieving the aforementioned object is a pneumatic tire having a designated rotational direction, characterized in that a plurality of drainage grooves positioned on each side of a tire equatorial line that extend at an angle, in a direction opposite the rotational direction, while curving towards an outside in a tire width direction is provided in a tread portion; an end on a leading side of the drainage grooves is closed, and an end on a trailing side of the drainage grooves is open to a tire side; an inclination angle to a tire circumferential direction at a terminal center position of the leading side of the drainage grooves is from 0° to 45°, while an inclination angle to the tire circumferential direction at the terminal center position of the trailing side of the drainage grooves is from 65° to 90°; while forming a land portion defined by a rib section continuously extending along the tire equatorial line and a plurality of branched sections continuously extending branched from the rib section towards the outside in the tire width direction in the tread portion, a plurality of sub grooves extending towards the rotational direction from the drainage grooves is provided in each branched section; the end on the leading side of the sub grooves is closed; an inclination angle to the tire circumferential direction of the sub grooves is larger than the inclination angle to the tire circumferential direction at the terminal center position of the leading side of the drainage grooves; and the inclination angles to the tire circumferential direction increase towards the sub grooves positioned farther on the outside in the tire width direction.

According to the present invention, instead of a main groove extending in the tire circumferential direction, a plurality of drainage grooves that angle while curving in a direction opposite the rotational direction, towards the outside in the tire width direction, and that have the end on the trailing side open to the tire side, as well as a plurality of sub grooves extending from the drainage grooves towards the rotational direction are adopted. Therefore, when traveling on wet road surfaces, water on road surfaces is drained towards the tire lateral direction, and the amount of water pushed back forwards can thus be reduced by the present invention. It is thereby possible to guarantee sufficient hydroplaning prevention performance when traveling straight. Also, in races with GT touring cars having tire housings, water can be prevented from remaining in the tire housings.

Furthermore, since land portions defined by a rib section continuously extending along the tire equatorial line, and by a plurality of branched sections continuously extending branched from the rib section towards the outside in the tire width direction are formed in the tread portion, sufficient rigidity of the tread portion can be guaranteed. It therefore becomes possible to achieve superior braking performance and turning performance on wet road surfaces. Running performance on wet roads when traveling straight and when cornering can thus be improved beyond that which was conventionally possible.

In the present invention, in addition to making the inclination angle to the tire circumferential direction at the terminal center position of the leading side of the drainage grooves 0° to 45° and making the inclination angle in the tire circumferential direction at the terminal center position of the trailing side of the drainage grooves 65° to 90°, it is also necessary to make the inclination angle to the tire circumferential direction of the sub grooves larger than the inclination angle to the tire circumferential direction at the terminal center position of the leading side of the drainage grooves. It is further necessary to make the inclination angle to the tire circumferential direction increase towards the sub grooves positioned farther on the outside in the tire width direction in order to guarantee favorable drainage performance.

Preferably, the width of each sub groove is 3 mm or more and the length in the tire circumferential direction of each sub groove is 50% or more of the length in the tire circumferential direction of each branched section. Drainage performance based on the sub grooves can thus be improved.

Preferably, a difference between the inclination angle in the tire circumferential direction at the terminal center position of the leading side of the drainage grooves and the inclination angle to the tire circumferential direction of the sub groove positioned nearest on the tire equatorial line side is from 5° to 10°, and the difference in the inclination angle to the tire circumferential direction between adjacent sub grooves to is from 5° to 10°. Drainage performance based on the sub grooves can thus be improved.

When determining each distance including a distance in the tire width direction between the terminal center position of the leading side of the drainage grooves and the tire equatorial line, a distance in the tire width direction between the terminal center position of the leading side of the drainage grooves and the terminal center position of the leading side of the sub grooves positioned nearest on the tire equatorial line side, a distance in the tire width direction between the terminal center position of the leading side of adjacent sub grooves, and a distance in the tire width direction between the terminal center position of the leading side of the sub groove positioned outermost on the outside in the tire width direction and the terminal center position of the trailing side of the drainage grooves, the drainage grooves and sub grooves are preferably arranged so that these distances gradually increase towards the outside in the tire width direction. Rigidity of the tread portion is optimized thereby, making it possible for satisfactory running performance to be exhibited in accordance with load fluctuation. Each of the aforementioned distances is a distance measured in the tire width direction along a tire tread surface.

Preferably, a plurality of sipes extending towards the rotational direction from the drainage grooves is provided in each branched section, and the intersection angle of the sipes with respect to a normal direction of the drainage groove is from 0° to 30°. Also, a depth of the sipes is preferably 75% or less of the depth of the drainage grooves. Rigidity of the tread portion is optimized by the addition of such sipes, thus making it possible to firmly grip the road.
- FIG. 1: is a development view showing the tread pattern of a pneumatic tire according to an embodiment of the present invention.
- FIG. 2: is an enlarged plan view showing the main part of FIG. 1.
- FIG. 3: is a development view showing the tread pattern of a pneumatic tire of a comparative example.
- FIG. 4: is a development view showing the tread pattern of a pneumatic tire of a conventional example.

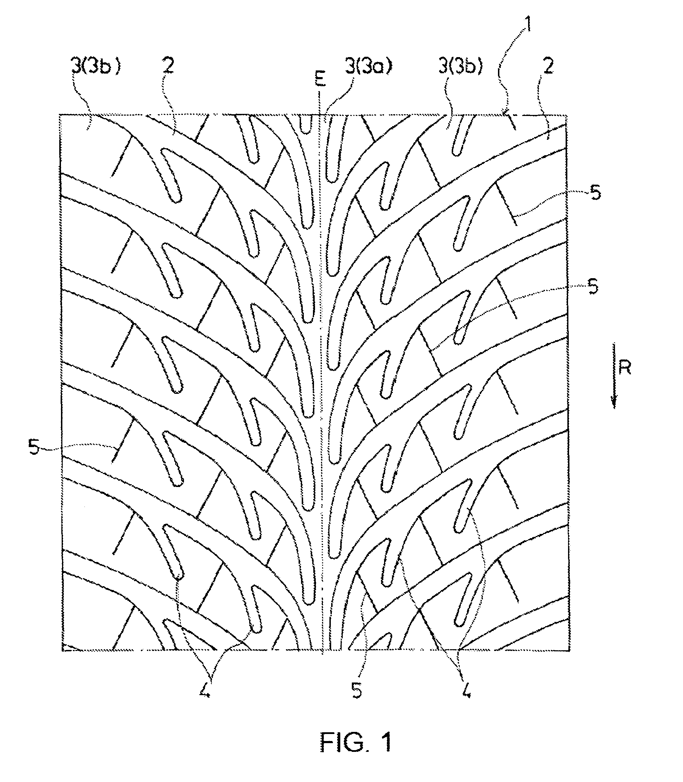

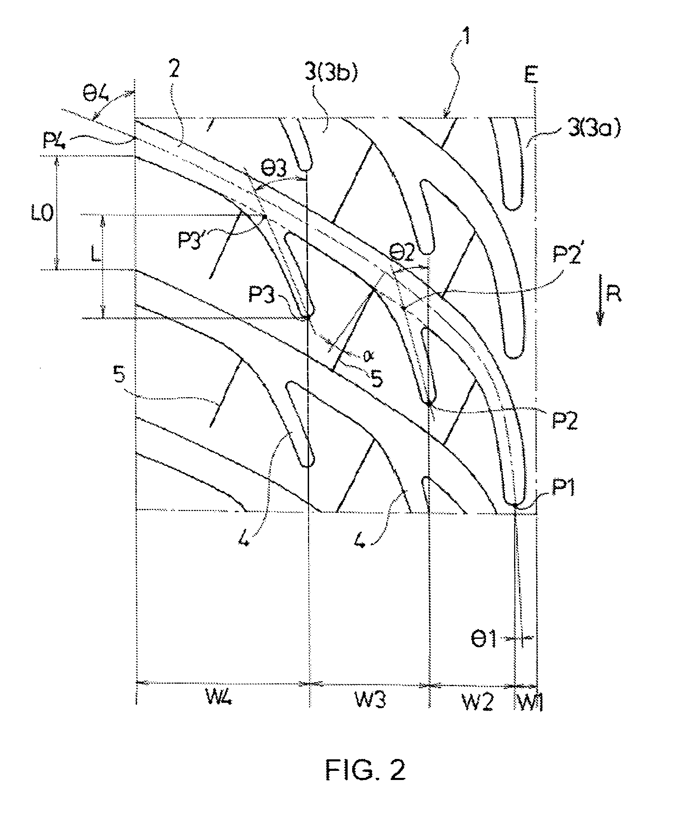

Detailed descriptions will be given below of a configuration of the present invention with reference to the accompanying drawings. FIG. 1 is a development view showing a tread pattern of a pneumatic tire according to an embodiment of the present invention, and FIG. 2 is an enlarged plan view showing the main part of FIG. 1. This pneumatic tire has a designated rotational direction R.

As shown in FIG. 1, a plurality of drainage grooves 2 positioned on each side of a tire equatorial line E that extend at an angle, in a direction opposite the rotational direction R, while curving towards an outside in a tire width direction is formed in a tread portion 1 at intervals in a tire circumferential direction. The drainage grooves 2 are formed with an end on a leading side (an end on the tire equatorial line side) closed and an end on a trailing side (an end on the outside in the tire width direction) open to a tire side. Since the drainage grooves 2 are the main drainage means in the tread portion 1, they preferably have a groove width from 5.0 mm to 20 mm and a groove depth from 2.5 mm to 8.0 mm. Thereby, land portions 3 defined by a rib section 3a continuously extending along the tire equatorial line and by a plurality of branched sections 3b continuously extending branched from the rib section 3a towards the outside in the tire width direction are formed in the tread portion 1.

In each branched section 3b a plurality of sub grooves 4 extending from the drainage grooves 2 towards rotational direction R is formed. In the present embodiment, two sub grooves 4 are formed in each branched section 3b. The sub grooves 4 are formed so that the end on the trailing side is in communication with the drainage grooves 2 while the end on the leading side is closed. Since the sub grooves 4 are drainage means assisting the drainage grooves 2, they preferably have a groove width from 3.0 mm to 12.0 mm and a groove depth from 2.5 mm to 8.0 mm.

In the aforementioned pneumatic tire, the plurality of drainage grooves 2 that extend at an angle, in the direction opposite the rotational direction R, while curving towards the outside in the tire width direction, and that has the end on the trailing side open to the tire side and the plurality of sub grooves 4 extending from the drainage grooves 2 towards the rotational direction R support the drainage function. Therefore, when traveling on wet road surfaces, water on road surfaces is drained towards the tire lateral direction, and thus the amount of water pushed back forwards with tire rotation can be reduced by the present invention. Particularly, since the drainage grooves 2 are smoothly curved over their entire length, the flow of water in the drainage grooves 2 is smooth, thus making it possible to effectively direct such water in the tire lateral direction. It is thus possible to guarantee sufficient hydroplaning prevention performance when traveling straight. Also, in races with GT touring cars having tire housings, water can be prevented from remaining in the tire housings.

Furthermore, since the land portions 3 defined by the rib section 3a continuously extending along the tire equatorial line E and by the plurality of branched sections 3b continuously extending branched from the rib section 3a towards the outside in the tire width direction are formed in the tread portion 1, sufficient rigidity of the tread portion 1 can be guaranteed, thus making it possible to achieve superior braking performance and cornering performance on wet road surfaces. That is, by using a tread pattern not having independent blocks surrounded by the drainage grooves 2 on all four sides, sufficient rigidity of the tread portion can be guaranteed. Thus, running performance on wet road surfaces when traveling straight and when cornering can be improved. Guaranteeing sufficient rigidity of the tread portion 1 is also advantageous for wear resistance.

As shown in FIG. 2, an inclination angle θ1 to the tire circumferential direction at a terminal center position P1 of the leading side of the drainage grooves 2 is from 0° to 45°. When the inclination angle 61 exceeds 45°, drainage ability in the tread center area deteriorates. In contrast, an inclination angle θ4 to the tire circumferential direction at a terminal center position P4 of the trailing side of the drainage grooves 2 is from 65° to 90°. When the inclination angle θ4 is less than 65°, rigidity in the shoulder areas is insufficient.

Also, inclination angles θ2 and θ3 to the tire circumferential direction of the sub grooves 4 are larger than the inclination angle θ1 to the tire circumferential direction at a terminal center position P1 of the leading side of the drainage grooves 2, and the inclination angles θ2 and θ3 to the tire circumferential direction increase towards the sub grooves 4 positioned further on the outside in the tire width direction. Specifically, the relationship between these inclination angles is θ1 < θ2 < θ3. By satisfying this relationship, it is possible to drain water effectively on road surfaces in the lateral direction of the tire when traveling on wet road surfaces. The inclination angles θ2 and θ3 are the inclination angles to the tire circumferential direction of a straight line connecting the terminal center positions P2, P3 of the leading side with the terminal center positions P2' and P3' of the trailing side, respectively.

In the aforementioned pneumatic tire, a length L in the tire circumferential direction of each sub groove 4 may be 50% or more and is preferably from 50% to 95% of a length L0 in a tire circumferential direction of each branched section 3b. Drainage performance based on the sub grooves 4 can thus be improved. When the length L of the sub grooves 4 is less than 50% of the length of the branched sections 3b, improvement in drainage performance deteriorates, but conversely, when more than 95%, braking performance and turning performance on wet road surfaces deteriorates since there is significant deterioration in the rigidity of the tread portion 1.

The difference between the inclination angle θ1 to the tire circumferential direction at the terminal center position P1 of the leading side of the drainage grooves 2 and the inclination angle θ2 to the tire circumferential direction of the sub grooves 4 positioned nearest on the tire equatorial line E side is from 5° to 10°, and the difference in the inclination angles θ2 and θ3 to the tire circumferential direction between adjacent sub grooves 4 is from 5° to 10°. Drainage performance based on the sub grooves 4 can thus be improved thereby. When the differences between the inclination angles θ1 to θ3 are outside the aforementioned ranges, improvement in drainage performance is insufficient.

Also, with regard to the aforementioned pneumatic tire, when determining distances including a distance W1 in the tire width direction between the terminal center position P1 of the leading side of the drainage grooves 2 and the tire equatorial line E, a distance W2 in the tire width direction between the terminal center position P1 of the leading side of the drainage grooves 2 and the terminal center position P2 of the leading side of the sub grooves 4 positioned nearest on the tire equatorial line E side, a distance W3 in the tire width direction between the terminal center positions P2 and P3 of the leading side of adjacent sub grooves 4, and a distance W4 in the tire width direction between the terminal center position P3 of the leading side of the sub grooves 4 positioned outermost on the outside in the tire width direction and the terminal center position P4 of the trailing side of the drainage grooves 2, the drainage grooves 2 and the sub grooves 4 are arranged so that these distances W1 to W4 gradually increase towards the outside in the tire width direction. Rigidity of the tread portion 1 is optimized thereby, thus making it possible for favorable running performance to be exhibited in accordance with load fluctuation.

That is, with fluctuation in the load applied to a tire, since the tread center area mainly contacts the ground in a low load area while areas to the shoulder contact the ground in a high load area, the necessary pattern rigidity in the low load area is less than the necessary pattern rigidity in the high load area. Thus, by making the rigidity of the tread center area relatively low and increasing the rigidity towards the shoulder sides based on the setting of the aforementioned distances W1 to W4, it is possible to exhibit favorable running performance in accordance with load fluctuation.

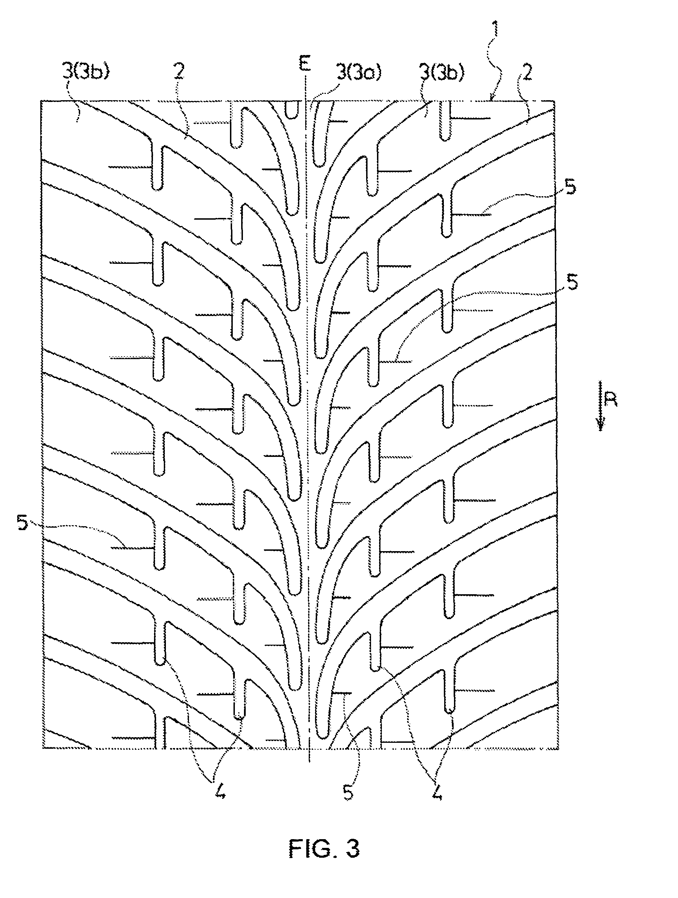

In each branched section 3b a plurality of sipes 5 extending from the drainage grooves 2 towards the rotational direction is formed. The sipes 5 are arranged so as to extend in a direction intersecting the drainage grooves 2. An intersection angle α of the sipes 5 with respect to a normal direction of the drainage grooves 2 may be from 0° to 30°. Also, a depth of the sipes 5 may be 75% or less of a depth of the drainage grooves 2 and is preferably from 25% to 75%. Particularly, the sipes 5 may be arranged so that parallelogram sections divided by the sub grooves 4 in the branched sections 3b are approximately equally divided. By the addition of such sipes 5, rigidity of the tread portion 1 is optimized, thus making it possible to firmly grip the road. The tires of Examples 1 to 3 (FIG. 1) and the tire of Comparative Example 1 (FIG. 3) were prepared as tires having a designated rotational direction, wherein a plurality of drainage grooves positioned on each side of the tire equatorial line and extending with curvature at an angle, in a direction opposite the rotational direction, towards the outside in the tire width direction, is provided in the tread portion, the end of the leading side of the drainage grooves being closed and the end of the trailing side of the drainage grooves being open to the tire side; land portions defined by a rib section continuously extending along the tire equatorial line and by a plurality of branched sections continuously extending branched from the rib section towards the outside in the tire width direction are formed in the tread portion; a plurality of sub grooves extending from the drainage groove towards the rotational direction is provided in each branched section, the end of the leading side of the sub grooves being closed, and the inclination angles θ1 to θ4 are set as in Table 1. The size of the front tires was 330/710R18 and the size of the rear tires was 330/710R17.

In Examples 1 to 3 and Comparative Example 1, the distance W1 was 9.5 mm, the distance W2 was 35.0 mm, the distance W3 was 55.0 mm, and the distance W4 was 77.0 mm. Also, in Examples 1 to 3 and Comparative Example 1, the depth of the drainage grooves was 7.0 mm and the depth of the sipes was 2.5 mm. Furthermore, in Examples 1 to 3, the intersection angle of the sipes with respect to the normal direction of the drainage grooves was from 0° to 30°. In contrast, in Comparative Example 1, the intersection angle of the sipes with respect to the normal direction of the drainage grooves was from 60° to 90°.

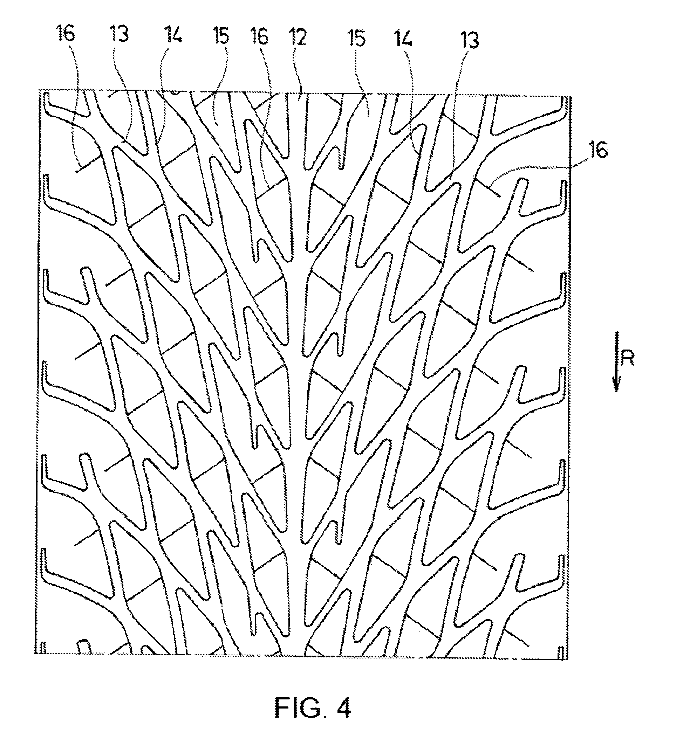

For comparison, a tire having a main groove (12) that is in the tread center position in a tread portion (11) and that extends in the tire circumferential direction, a plurality of first angled grooves (13) that extend at an angle and communicate with the main groove in a direction opposite the rotational direction from the tread center position towards each shoulder side, and a plurality of second angled grooves (14) that are not in communication with the main groove and that extend at an angle in the same direction as the first angled grooves, while intersecting six of the first angled grooves, wherein a plurality of blocks (15) are partitioned by the main groove and the multiple angled grooves, and a sipe (16) provided in each block was prepared as a conventional example (FIG. 4).

The running performance on a wet road surface and wear resistance after running of these tires was evaluated by the following evaluation methods, and the results thereof are shown in Table 1.

Running performance on wet road surfaces: Test tires were mounted on specific rims (front: 18 x 13JJ and rear: 17 x 13JJ), such were mounted onto a racing car having an engine displacement of 4,500 cc, and then the tires were inflated to an air pressure of 175 kPa. Then test runs on a circuit having water scattered thereon were performed, and the lap time was measured while a sensory evaluation was performed by the test driver. With respect to the sensory evaluation, running performance when traveling straight on a wet road surface, running performance when cornering on a wet road surface, and overall running performance on a wet road surface were evaluated. The evaluation results are represented as index values with the conventional example as 100. Larger index values indicate superior running performances.

Worn condition after running: After the aforementioned test run, the tread portion of each test tire was visually confirmed and the worn condition thereof evaluated. The evaluation result is represented as an index with the conventional example as 100. The larger the index, the more superior the wear resistance.

**Table 1**

| | | Conventional Example | Example 1 | Example 2 | Example 3 | Comparative Example 1 |
|---|---|---|---|---|---|---|
| Inclination Angle θ1 (°) | | - | 0 | 10 | 20 | 0 |
| Inclination Angle θ2 (°) | | - | 10 | 20 | 25 | 0 |
| Inclination Angle θ3 (°) | | - | 20 | 30 | 35 | 0 |
| Inclination Angle θ4 (°) | | - | 75 | 70 | 65 | 75 |
| Running Performance on Wet Road Surfaces | Lap Time | 57'84 | 57'17 | 57'23 | 57'19 | 57'50 |
| | Overall Sensory Evaluation | 100 | 130 | 130 | 130 | 115 |
| | Sensory Evaluation when Traveling Straight | 100 | 120 | 120 | 130 | 110 |
| | Sensory Evaluation when Cornering | 100 | 140 | 140 | 130 | 120 |
| Worn Condition After Running | | 100 | 110 | 109 | 108 | 105 |

As is clear from Table 1, all of the tires of Examples 1 to 3 had superior running performances on wet road surfaces when traveling straight and when cornering compared to the conventional example, and wear resistance was also favorable. Although there was improvement in running performance on wet road surfaces for the tire of comparative example 1, such improvement was inferior to that of Examples 1 to 3.

### REFERENCE SIGNS LIST

- 1: Tread portion
- 2: Drainage grooves
- 3: Land portion
- 3a: Rib section
- 3b: Branched sections
- 4: Sub grooves
- 5: Sipes
- E: Tire equator
- R: Rotational direction

## Claims

1. A pneumatic tire having a designated rotational direction (R), wherein, a plurality of drainage grooves (2) positioned on each side of a tire equatorial line (E) that extend at an angle, in a direction opposite the rotational direction (R), while curving towards an outside in a tire width direction, is provided in a tread portion (1);
an end of a leading side of the drainage grooves (2) is closed and an end of a trailing side of the drainage grooves (2) is open to a tire side;
an inclination angle (θ1) to a tire circumferential direction at a terminal center position (P1) of the leading side of the drainage grooves (2) is from 0° to 45°, while an inclination angle (64) to the tire circumferential direction at a terminal center position (P4) of the trailing side of the drainage grooves (2) is from 65° to 90°;
land portions (3) defined by a rib section (3a) continuously extending along the tire equatorial line (E) and by a plurality of branched sections (3b) continuously extending branched from the rib section (3a) towards the outside in the tire width direction are formed in the tread portion (1);
a plurality of sub grooves (4) extending from the drainage grooves (2) towards the rotational direction (R) is provided in each branched section (3b); and
an end of a leading side of the sub grooves (4) is closed;
**characterized in that**
- an inclination angle (θ2, θ3) to the tire circumferential direction of the sub grooves (4) is larger than an inclination angle (θ1) to the tire circumferential direction at the terminal center position (P1) of the leading side of the drainage grooves (2); and
- the inclination angles to the tire circumferential direction increase towards the sub grooves (4) positioned farther on the outside in the tire width direction.

2. The pneumatic tire according to claim 1, wherein
a width of each sub groove (4) is 3 mm or more and a length in the tire circumferential direction of each sub groove (4) is 50% or more of a length in the tire circumferential direction of each branched section (3b).

3. The pneumatic tire according to claim 1 or 2, wherein
a difference between the inclination angle (θ1) to the tire circumferential direction at the terminal center position (P1) of the leading side of the drainage grooves (2) and the inclination angle (θ2) to the tire circumferential direction of a sub groove (4) positioned nearest on a tire equatorial line (E) side is from 5° to 10°, and a difference in the inclination angles (θ2, θ3) to the tire circumferential direction between adjacent sub grooves (4) is from 5° to 10°

4. The pneumatic tire according to anyone of claims 1 to 3, wherein,
when determining distances of a distance in the tire width direction between the terminal center position (P1) of the leading side of the drainage grooves (2) and the tire equatorial line (E), a distance in the tire width direction between the terminal center position (P1) of the leading side of the drainage grooves (2) and a terminal center position (P2) of the leading side of a sub groove (4) positioned nearest on the tire equatorial line (E) side, a distance in the tire width direction between terminal center positions (P2, P3) of the leading side of adjacent sub grooves (4), and a distance in the tire width direction between a terminal center position (P3) of the leading side of a sub groove (4) positioned outermost on the outside in the tire width direction and the terminal center position (P4) of the trailing side of the drainage grooves (2), the drainage grooves (2) and sub grooves (4) are arranged so that the distances gradually increase towards the outside in the tire width direction, respectively.

5. The pneumatic tire according to anyone of claims 1 to 4, wherein
a plurality of sipes (5) extending from the drainage grooves (2) towards the rotational direction (R) is provided in each branched section (3b), and an intersection angle of the sipes (5) with respect to a normal direction of the drainage grooves is from 0° to 30°.

6. The pneumatic tire according to claim 5, wherein a depth of the sipes (5) is preferably 75% or less of a depth of the drainage grooves (2).

## Patentansprüche

1. Luftreifen mit einer vorgesehenen Drehrichtung (R), wobei in einem Laufflächenabschnitt (1) mehrere Abflussrillen (2) bereitgestellt sind, die auf jeder Seite einer in einem Winkel verlaufenden Reifenäquatoriallinie (E) positioniert sind und in einer der Drehrichtung (R) entgegengesetzten Richtung verlaufen, während sie in einer Reifenbreitenrichtung nach außen gekrümmt sind;
ein Ende einer führenden Seite der Abflussrillen (2) geschlossen ist und ein Ende einer nachlaufenden Seite der Abflussrillen (2) zu einer Reifenseite hin offen ist;
ein Neigungswinkel (61) zu einer Reifenumfangsrichtung an einer Endpunktmittelposition (P1) der führenden Seite der Abflussrillen (2) von 0° bis 45° beträgt, während ein Neigungswinkel (64) zur Reifenumfangsrichtung an einer Endpunktmittelposition (P4) der nachlaufenden Seite der Abflussrillen (2) von 65° bis 90° beträgt;
Anlegeabschnitte (3), die durch einen Rippenteilabschnitt (3a) definiert sind, der durchgehend entlang der Reifenäquatoriallinie (E) verläuft, sowie durch mehrere verzweigte Teilabschnitte (3b), die vom Rippenteilabschnitt (3a) durchgehend in Reifenbreitenrichtung nach außen hin verzweigen, im Laufflächenabschnitt (1) gebildet werden;
mehrere Unterrillen (4), die von den Abflussrillen (2) hin zur Drehrichtung (R) verlaufen, in jedem verzweigten Teilabschnitt (3b) bereitgestellt sind; und
ein Ende einer führenden Seite der Unterrillen (4) geschlossen ist;
**dadurch gekennzeichnet, dass**
- ein Neigungswinkel (62, 63) zur Reifenumfangsrichtung der Unterrillen (4) größer ist als ein Neigungswinkel (61) zur Reifenumfangsrichtung an der Endpunktmittelposition (P1) der führenden Seite der Abflussrillen (2); und
- die Neigungswinkel zur Reifenumfangsrichtung hin zu den Unterrillen (4), die weiter außen in Reifenbreitenrichtung positioniert sind, zunehmen.

2. Luftreifen nach Anspruch 1, wobei
eine Breite jeder Unterrille (4) 3 mm oder mehr beträgt und eine Länge in Reifenumfangsrichtung jeder Unterrille (4) 50 % oder mehr einer Länge in der Reifenumfangsrichtung jedes verzweigten Teilabschnitts (3b) beträgt.

3. Luftreifen nach Anspruch 1 oder 2, wobei eine Differenz zwischen dem Neigungswinkel (θ1) zur Reifenumfangsrichtung an der Endpunktmittelposition (P1) der führenden Seite der Abflussrillen (2) und dem Neigungswinkel (θ2) zur Reifenumfangsrichtung einer Unterrille (4), die am nächsten auf der Seite einer Reifenäquatoriallinie (E) positioniert ist, von 5° bis 10° beträgt, und eine Differenz zwischen den Neigungswinkeln (θ2, θ3) zur Reifenumfangsrichtung zwischen angrenzenden Unterrillen (4) von 5° bis 10° beträgt.

4. Luftreifen nach einem der Ansprüche 1 bis 3, wobei beim Bestimmen der Abstände eines Abstands in der Reifenbreitenrichtung zwischen der Endpunktmittelposition (P1) der führenden Seite der Abflussrillen (2) und der Reifenäquatoriallinie (E) ein Abstand in der Reifenbreitenrichtung zwischen der Endpunktmittelposition (P1) der führenden Seite der Abflussrillen (2) und einer Endpunktmittelposition (P2) der führenden Seite einer Unterrille (4), die am nächsten auf der Seite einer Reifenäquatoriallinie (E) positioniert ist, ein Abstand in Reifenbreitenrichtung zwischen Endpunktmittelpositionen (P2, P3) der führenden Seite angrenzender Unterrillen (4), und ein Abstand in Reifenbreitenrichtung zwischen einer Endpunktmittelposition (P3) der führenden Seite einer Unterrille (4), die am weitesten außen an der Außenseite in Reifenbreitenrichtung positioniert ist, und der Endpunktmittelposition (P4) der führenden Seite der Abflussrillen (2) die Abflussrillen (2) und Unterrillen (4) so angeordnet sind, das die Abstände jeweils in Reifenbreitenrichtung nach außen hin allmählich größer werden.

5. Luftreifen nach einem der Ansprüche 1 bis 4, wobei mehrere Lamellen (5), die von den Abflussrillen (2) zur Drehrichtung (R) hin verlaufen, in jedem verzweigten Teilabschnitt (3b) bereitgestellt sind, und wobei ein Schnittwinkel der Lamellen (5) in Bezug auf eine normale Richtung der Abflussrillen von 0° bis 30° beträgt.

6. Luftreifen nach Anspruch 5, wobei eine Tiefe der Lamellen (5) vorzugsweise 75 % oder weniger einer Tiefe der Abflussrillen (2) beträgt.

## Revendications

1. Pneu ayant une direction de rotation (R) désignée, dans lequel une pluralité de rainures d'évacuation (2) positionnées de chaque côté d'une ligne équatoriale de pneu (E) qui s'étendent selon un angle, dans une direction opposée à la direction de rotation (R), tout en s"incurvant en direction de l'extérieur dans une direction de largeur du pneu, est fournie dans une partie de bande de roulement (1) ;
une extrémité d'un côté d'attaque des rainures d'évacuation (2) est fermée et une extrémité d'un côté de fuite des rainures d'évacuation (2) est ouverte vers un côté du pneu ;
l'angle d'inclinaison (θ1) par rapport à la direction circonférentielle du pneu à une position centrale terminale (P1) du côté d'attaque des rainures d'évacuation (2) va de 0° à 45°, tandis que l'angle d'inclinaison (θ4) par rapport à la direction circonférentielle du pneu à une position centrale terminale (P4) du côté de fuite des rainures d'évacuation (2) va de 65° à 90° ;
des parties de plat (3) définies par une section de nervure (3a) s'étendant de façon continue le long de la ligne équatoriale de pneu (E) et par une pluralité de sections ramifiées (3b) s'étendant de façon continue, ramifiées à partir de la section de nervure (3a) en direction de l'extérieur dans la direction de largeur du pneu sont formées dans la partie de bande de roulement (1) ;
une pluralité de rainures secondaires (4) s'étendant à partir des rainures d'évacuation (2) vers la direction de rotation (R) est fournie dans chaque section ramifiée (3b) ; et
une extrémité d'un côté d'attaque des rainures secondaires (4) est fermée ;
**caractérisé en ce que**
- l'angle d'inclinaison (θ2, θ3) par rapport à la direction circonférentielle du pneu des rainures secondaires (4) est plus grand que l'angle d'inclinaison (θ1) par rapport à la direction circonférentielle du pneu à la position centrale terminale (P1) du côté d'attaque des rainures d'évacuation (2) ; et
- les angles d'inclinaison par rapport à la direction circonférentielle du pneu augmentent en direction des rainures secondaires (4) positionnées plus loin sur l'extérieur dans la direction de largeur du pneu.

2. Pneu selon la revendication 1, dans lequel la largeur de chaque rainure secondaire (4) est de 3 mm ou plus et la longueur dans la direction circonférentielle du pneu de chaque rainure secondaire (4) est 50 % ou plus de la longueur dans la direction circonférentielle du pneu de chaque section ramifiée (3b).

3. Pneu selon la revendication 1 ou 2, dans lequel la différence entre l'angle d'inclinaison (θ1) par rapport à la direction circonférentielle du pneu à la position centrale terminale (P1) du côté d'attaque des rainures d'évacuation (2) et l'angle d'inclinaison (θ2) par rapport à la direction circonférentielle du pneu d'une rainure secondaire (4) positionnée la plus proche sur un côté de ligne équatoriale de pneu (E) va de 5° à 10°, et la différence dans les angles d'inclinaison (θ2, θ3) par rapport à la direction circonférentielle du pneu entre des rainures secondaires adjacentes (4) va de 5° à 10°.

4. Pneu selon l'une quelconque des revendications 1 à 3, dans lequel, lors de la détermination de distances d'une distance dans la direction de largeur du pneu entre la position centrale terminale (P1) du côté d'attaque des rainures d'évacuation (2) et la ligne équatoriale de pneu (E), une distance dans la direction de largeur du pneu entre la position centrale terminale (P1) du côté d'attaque des rainures d'évacuation (2) et une position centrale terminale (P2) du côté d'attaque d'une rainure secondaire (4) positionnée la plus proche sur le côté de la ligne équatoriale de pneu (E), d'une distance dans la direction de largeur du pneu entre les positions centrales terminales (P2, P3) du côté d'attaque de rainures secondaires adjacentes (4), et d'une distance dans la direction de largeur du pneu entre une position centrale terminale (P3) du côté d'attaque d'une rainure secondaire (4) positionnée la plus extérieure sur l'extérieur dans la direction de largeur du pneu et la position centrale terminale (P4) du côté arrière des rainures d'évacuation (2), les rainures d'évacuation (2) et les rainures secondaires (4) sont arrangées de sorte que les distances augmentent progressivement en direction de l'extérieur de la direction de largeur du pneu, respectivement.

5. Pneu selon l'une quelconque des revendications 1 à 4, dans lequel une pluralité de lamelles (5) s'étendant à partir des rainures d'évacuation (2) en direction de la direction de rotation (R) est fournie dans chaque section ramifiée (3b), et l'angle d'intersection des lamelles (5) par rapport à une direction normale des rainures d'évacuation va de 0° à 30°.

6. Pneu selon la revendication 5, dans lequel la profondeur des lamelles (5) est de préférence 75 % ou moins de la profondeur des rainures d'évacuation (2).
